# FASCICULE DE BREVET EUROPEEN

(11) **EP 3 156 636 B1**
(45) Date de publication et mention de la délivrance du brevet: **03.11.2021**
(21) Numéro de dépôt: 16193301.5
(22) Date de dépôt: 11.10.2016
(51) Int. Cl.: F02K 9/64

(54) **SYSTÈME DE PROPULSION À TRANSFERTS THERMIQUES AMÉLIORÉS**
ANTRIEBSSYSTEM MIT VERBESSERTER WÄRMEÜBERTRAGUNG
PROPULSION SYSTEM WITH IMPROVED HEAT TRANSFER

(30) Priorité: 12.10.2015 FR 1559660
(43) Date de publication de la demande: 19.04.2017
(73) Titulaire: CENTRE NATIONAL D'ETUDES SPATIALES, 75001 Paris (FR)
(72) Inventeur: HERPE, Julien, 78000 VERSAILLES (FR); THERON, Marie, 92140 CLAMART (FR)
(74) Mandataire: Germain Maureau

(56) Documents cités:
- US-A- 3 626 698
- US-A- 5 070 937
- US-A- 5 582 000
- US-A1- 2006 219 191

## Description

### DOMAINE TECHNIQUE GENERAL

L'invention concerne une chambre de propulsion d'un moteur de fusée et concerne plus particulièrement un système de refroidissement d'une telle chambre.

### ETAT DE LA TECHNIQUE

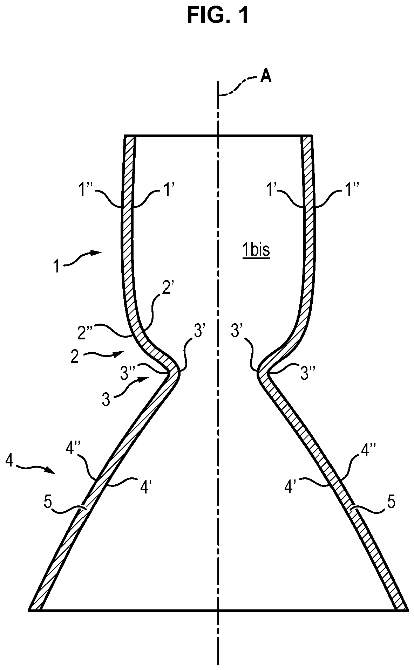

La **figure 1** illustre schématiquement une chambre de combustion d'un moteur-fusée comprenant depuis sa partie supérieure jusqu'à sa partie inférieure une partie cylindrique ou corps de chambre de combustion 1 (là où la combustion en tant que telle a lieu), une partie 2 convergente, et une partie 4 divergente. La jonction entre la partie 4 convergente et la partie divergente 4 correspond au col 3 de la chambre de combustion (à section minimale).

Au cours du fonctionnement de la chambre de propulsion, des gaz chauds sont produits par combustion du comburant et combustible dans le corps de chambre 1 puis sont détendus dans la partie divergente 4.

Ces gaz peuvent atteindre des températures élevées, typiquement jusqu'à 3500 °K, et peuvent nuire à l'intégrité des parois de la chambre de propulsion.

Aussi, de manière classique le corps de chambre 1, la partie convergente 2, le col 3 et le divergent 4 sont constitués par une paroi interne 1', 2', 3', 4' et une paroi externe 1", 2", 3", 4" qui délimitent une cavité 5 (appelée circuit de refroidissement) (zone hachurée sur la figure 1) à l'intérieur de laquelle on fait circuler un fluide caloporteur qui permet de refroidir la paroi de la chambre.

Ainsi, l'extraction de flux thermique de la chambre de propulsion est cruciale dans le bon fonctionnement de cette dernière, puisqu'il permet d'assurer son refroidissement en maintenant ses parois à des températures acceptables du point de vue de sa tenue thermomécanique. Par ailleurs, pour certains cycles moteurs intégrés, comme le cycle « expander », le flux thermique extrait du circuit de refroidissement est également utilisé pour faire fonctionner les turbines des turbopompes qui alimentent le moteur. L'efficacité des turbines augmente avec le flux thermique extrait du circuit de refroidissement. Dans ce type de cycle moteur, la maximisation du flux thermique extrait du circuit de refroidissement, à iso-conditions d'alimentation de celui-ci, est donc recherchée, pour accroître la performance globale du moteur. Des dispositifs de type ailettes (en anglais « ribs ») (voir la figure 1B du document US 2006/0219191A1) sont parfois utilisés pour augmenter ce transfert thermique, par l'augmentation de surface de la paroi chaude qu'ils offrent. Ce même document décrit en outre l'utilisation de chevrons dans le cas de chambre de combustion ondulée (« corrugated » en anglais), c'est-à-dire composée de plusieurs tubes solidaires. Les chevrons sont alors disposés dans les vallées, c'est-à-dire au niveau des jonctions entre les tubes, pour générer des tourbillons transversaux à la paroi (c'est-à-dire que leur axe ne s'étend pas le long de la paroi). Mais cette solution ne vise pas les chambres de combustion qui ne sont pas ondulées (« smooth inner walls » en anglais voir paragraphe dudit document). D'autres solutions en accord avec l'état de l'art antérieur sont décrites dans le document US 3 626 698 A.

### PRESENTATION DE L'INVENTION

L'invention propose d'améliorer l'extraction de flux thermique à travers le circuit de refroidissement d'une chambre de propulsion d'un moteur de fusée.

A cet effet, l'invention propose un système de propulsion d'une fusée comprenant une chambre de combustion dans laquelle est réalisée une combustion et qui est relié par un col à une partie divergente, et dans laquelle s'écoule des flux de gaz chauds selon un axe longitudinal de la chambre de combustion, la chambre de combustion comprenant une paroi interne et une paroi externe définissant une cavité à l'intérieur de laquelle s'écoule un fluide caloporteur pour refroidir la chambre de combustion ;
une pluralité de générateurs de tourbillons d'écoulement situé sur la paroi interne à l'intérieur du corps de chambre de combustion et configurés pour que les flux de gaz chauds s'écoulent de manière tourbillonnante selon l'axe longitudinal le long de la paroi interne afin d'augmenter les transferts thermiques entre les flux de gaz chauds et la paroi interne de la chambre de combustion.

L'invention trouve une application avantageuse dans le cas de chambre de combustion dite « lisse », c'est-à-dire non-ondulée.

L'invention est avantageusement complétée par les caractéristiques suivantes, prises seules ou en une quelconque de leur combinaison techniquement possible.

Le système comprend en outre des ailettes situées en amont des générateurs de tourbillons, les générateurs de tourbillons étant configurés pour mélanger des flux de gaz chauds de températures différentes obtenus en sortie des ailettes et des interstices inter-ailettes.

Le générateur de tourbillons est une pièce en saillie depuis la paroi interne et dirigée vers l'intérieur de la chambre de combustion en faisant un angle non nul par rapport à la paroi interne, le générateur de tourbillons créant des tourbillons longitudinaux selon un axe parallèle à l'axe longitudinal de la chambre de combustion.

Le générateur de tourbillon est fait d'une pièce avec la partie interne de la paroi du corps de chambre de combustion.

Le générateur de tourbillons est une pièce de forme triangulaire, rectangulaire, prisme.

Les générateurs de tourbillons sont disposés en rangée le long de la paroi interne.

Les rangées sont décalées les unes par rapport aux autres.

Sur une même rangée deux générateurs de tourbillons disposés côte à côte sont parallèles entre eux.

Le fluide caloporteur est constitué par un combustible ou un comburant.

Les générateurs de tourbillons longitudinaux améliorent l'extraction de flux thermique par 'augmentation du coefficient d'échange convectif, contrairement aux « ribs » et aux technologies équivalentes, qui utilisent l'augmentation de la surface d'échange pour améliorer l'extraction de flux. Le réseau de générateurs de tourbillons longitudinaux a l'avantage de générer en proche paroi un écoulement moins hétérogène thermiquement que les configurations avec ailettes, permettant une meilleure efficacité moyenne sur l'ensemble de la chambre en termes d'amélioration du flux thermique extrait, ainsi qu'un impact moindre sur la tenue thermomécanique de la paroi chaude de la chambre (via des gradients thermiques circonférentiels moindres).

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels outre la figure 1 déjà discutée :
- les figures 2a et 2b illustrent des vues détaillées d'un corps de chambre de combustion d'un système de propulsion ;
- la figure 3 illustre une vue d'un générateur de tourbillons longitudinaux dans une chambre de combustion d'un système de propulsion ;
- la figure 4 illustre plusieurs rangées de générateurs de tourbillons longitudinaux dans une chambre de combustion d'un système de propulsion ;
- les figures 5 et 6 illustrent différents types de générateur de tourbillons.

Sur l'ensemble des figures les éléments similaires portent des références identiques.

### DESCRIPTION DETAILLEE DE L'INVENTION

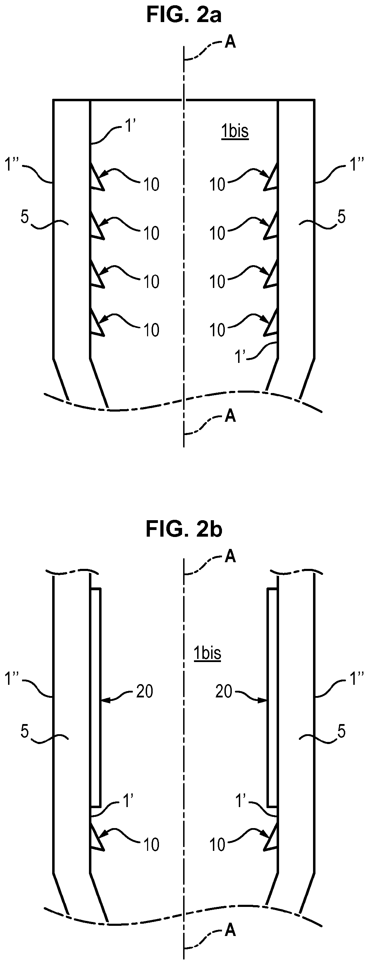

En relation avec les **figures 2a** et **2b****,** un système de propulsion du type de celui décrit en relation avec la figure 1, comprend, pour augmenter les transferts thermiques entre les gaz chauds et le fluide circulant dans la cavité 5 de la chambre 1 de combustion, des générateurs 10 de tourbillons longitudinaux (en anglais, « *longitudinal vortex generator »)* d'écoulement situé sur la paroi 1' interne à l'intérieure 1ter de la chambre 1 de combustion.

Ces générateurs de tourbillons 10 peuvent être utilisés seuls (figure 2a) ou en combinaison avec des « ribs » 20 (figure 2b) de type de ceux décrits dans le document US 2006/0219191A1. Dans ce dernier cas, les générateurs de tourbillons sont situés en aval des « ribs » selon le sens d'écoulement des gaz chauds et permettent le mélange des courants de gaz chauds de températures différentes obtenus en sortie des « ribs » et en sortie des interstices inter-« ribs ». En effet, en l'absence de générateurs de tourbillons longitudinaux en sortie des « ribs », l'augmentation des échanges thermiques obtenue grâce à l'augmentation de surface d'échange des « ribs » dans la partie cylindrique de la chambre de combustion est partiellement perdue dans la zone située en aval des « ribs », du fait de la présence de courants de gaz plus chauds et plus froids respectivement en face des « ribs » et dans les interstices inter-« ribs ».

Ainsi, dans cette configuration, les générateurs de tourbillons améliorent les performances en termes d'amélioration d'extraction du flux thermique par rapport à la configuration avec « ribs » seuls.

Préférablement néanmoins, les générateurs de tourbillons sont utilisés dans une chambre de combustion dite lisse (« smooth »). Cette architecture s'oppose à celle dit ondulée, pour laquelle la chambre de combustion est formée d'une pluralité de tubes liés entre eux, ce qui définit une succession de lobes et de creux au niveau de la paroi interne.

Les chambres de combustion lisses ont généralement une section (orthogonale à l'axe longitudinal AA) qui est circulaire ou ovale. Une définition plus générale consiste à définir les chambres de combustion lisses comme ayant une section définissant le contour d'un ensemble convexe, c'est-à-dire que tout point d'un segment reliant deux points de l'ensemble appartient audit ensemble.

On comprend que les dimensions de la section varient en fonction de son emplacement le long de l'axe longitudinal AA. En effet, la chambre de combustion peut être par exemple de type cylindrique ou sphérique.

Les générateurs 10 de tourbillons sont configurés pour que les gaz chauds GC s'écoulant dans la chambre 1 de combustion, lorsqu'ils rencontrent un générateur 10 de tourbillons, créent des tourbillons 100 longitudinaux selon une direction générale selon l'axe longitudinal AA le long de la paroi interne afin d'augmenter les transferts thermiques entre les gaz chauds et la paroi.

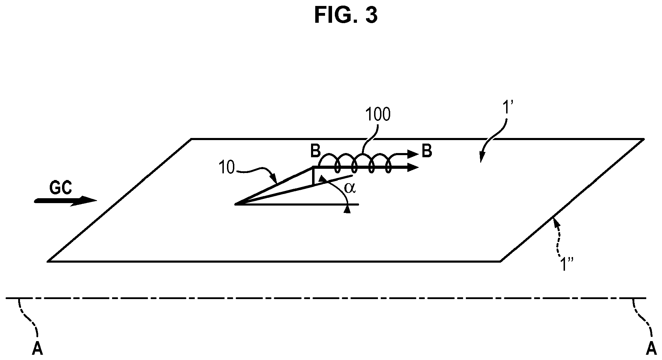

En particulier, un tourbillon longitudinal est un enroulement de lignes de courant partant du bord de fuite et du bord d'attaque du générateur de tourbillon. L'enroulement moyen de ces lignes de courant se fait autour de l'axe BB comme indiqué sur la **figure 3****.**

Les générateurs de tourbillons permettent d'augmenter le coefficient d'échange convectif au niveau de la paroi 1' de la chambre de combustion 1.Le coefficient d'échange convectif caractérise le transfert thermique entre les gaz chauds et la paroi. L'utilisation de générateur de tourbillons permet d'augmenter le transfert thermique sans augmenter la surface d'échange (comme c'est le cas avec l'utilisation de « ribs »).

En particulier, lorsqu'utilisés avec des « ribs », les générateurs de tourbillons sont configurés pour mélanger des courants de gaz chauds de températures différentes obtenus en sortie des ailettes et en sortie des interstices inter-ailettes.

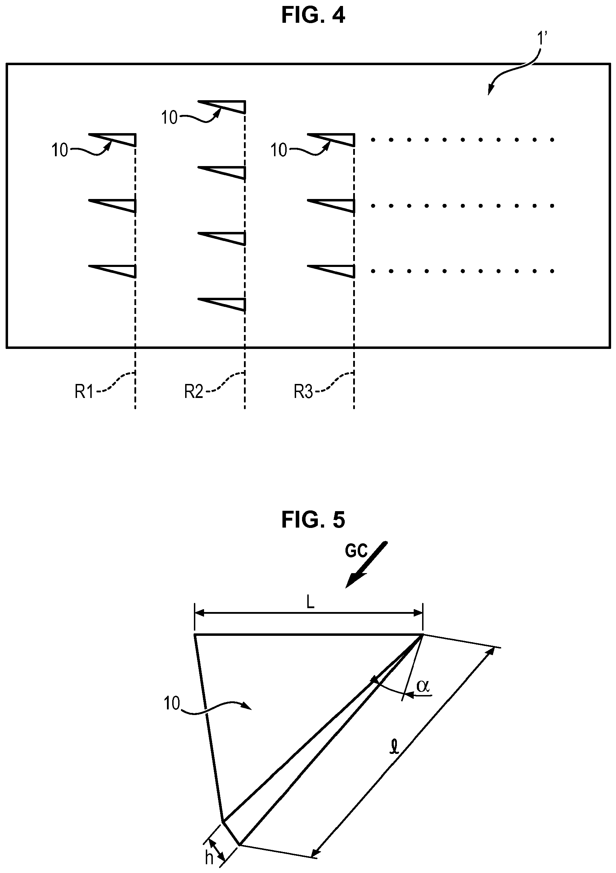

Comme cela est visible sur la **figure 4**, les générateurs 10 de tourbillons sont de préférences disposés par rangées R1, R2, R3 le long de la paroi interne 1' de la chambre 1 de combustion.

Des rangées consécutives peuvent être décalées mais ce n'est pas obligatoire.

La disposition en rangées des générateurs de tourbillons permet de régénérer les tourbillons au fur et à mesure de la progression des gaz chauds dans la chambre 1 de combustion.

Sur une même rangée les générateurs 10 de tourbillons peuvent être parallèles entre eux, mais en général si un générateur à un angle α positif par rapport à l'axe de l'écoulement, les deux plus proches ont un angle de signe négatif

Les générateurs de tourbillons peuvent être tous identiques mais ce n'est pas obligatoire. Le générateur de tourbillons est de préférence une pièce en saillie depuis la paroi interne 1' et dirigé vers l'intérieur 1ter de la chambre 1 de combustion en faisant un angle α non nul par rapport au sens de l'écoulement correspondant à l'axe de la chambre 1', le générateur de tourbillons créant des tourbillons longitudinaux selon un axe BB parallèle à l'axe longitudinal AA de la chambre 1 de combustion (voir la figure 3). En outre, pour éviter d'avoir des points de connexion (type points de soudure), les générateurs de tourbillons sont faits d'une pièce avec la paroi interne de la chambre 1 de combustion.

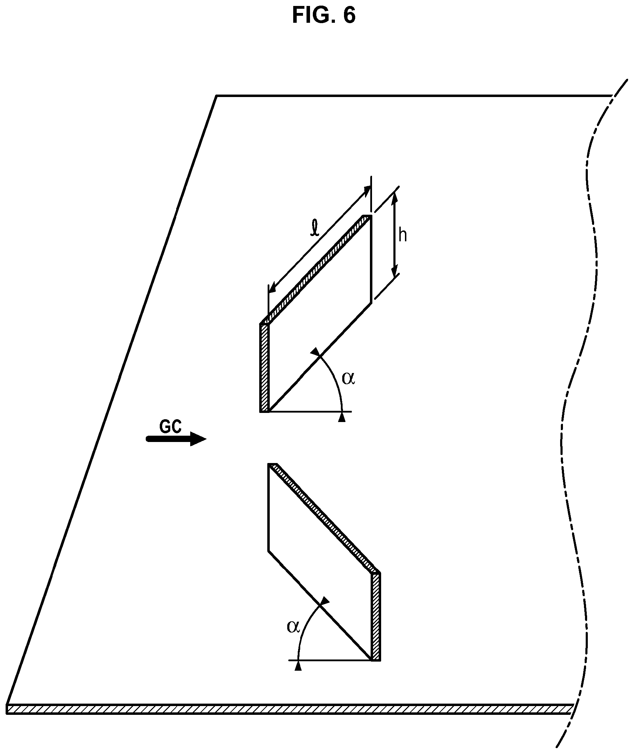

Le générateur de tourbillon peut prendre diverses formes :
- Une forme triangulaire **(****figure 3****)** ;
- une forme de cale triangulaire **(****figure 5****)** d'épaisseur h de longueur I et de largeur L et en saillie depuis la paroi interne selon un angle α ;
- Une forme rectangulaire **(****figure 6****)** de longueur e et de largeur e et en saillie depuis la paroi interne selon un angle a.

Les dimensions et la position des générateurs sont choisies de manière à ce que :
- l'intensité du tourbillon soit suffisante pour augmenter l'intensité du coefficient d'échange convectif et donc le transfert thermique ;
- les générateurs de tourbillons ne soient pas dégradés par les phénomènes de combustion du matériau composant le générateur de tourbillon (érosion) ;
- la tenue mécanique du corps de chambre ne soit pas altérée par des points chauds (l'augmentation de la température de la paroi interne due à l'augmentation des échanges convectifs côté chaud reste limitée) ;
- la jonction entre le corps de chambre et les générateurs de tourbillons soit garantie.
- ils soient positionnés dans les zones de la chambre les plus pertinentes. On pourra ainsi utiliser des promoteurs de tourbillons dans la partie cylindrique ou encore en entrée de la partie convergente afin de mélanger le fluide en paroi (pour le rendre plus homogène).

## Revendications

1. Système de propulsion d'une fusée comprenant
une chambre (1) de combustion dans laquelle est réalisée une combustion et qui est relié par un col (2) à une partie (4) divergente, et dans laquelle s'écoule des flux de gaz chauds (GC) selon un axe longitudinal (AA) de la chambre (1) de combustion, la chambre (1) de combustion comprenant une paroi interne (1') et une paroi externe (1") définissant une cavité (5) à l'intérieur de laquelle s'écoule un fluide caloporteur pour refroidir la chambre (1) de combustion ;
une pluralité de générateurs (10) de tourbillons d'écoulement situé sur la paroi (1') interne à l'intérieur (1bis) du corps de chambre (1) de combustion et configurés pour que les flux de gaz chauds s'écoulent de manière tourbillonnante selon l'axe longitudinal (AA) le long de la paroi interne afin d'augmenter les transferts thermiques entre les flux de gaz chauds et la paroi interne de la chambre (1) de combustion.

2. Système de propulsion selon la revendication 1, comprenant en outre des ailettes (20) situées en amont des générateurs de tourbillons, les générateurs de tourbillons étant configurés pour mélanger des flux de gaz chauds de températures différentes obtenus en sortie des ailettes et des interstices inter-ailettes.

3. Système de propulsion selon la revendication 1, dans lequel le générateur de tourbillons est une pièce en saillie depuis la paroi interne (1') et dirigée vers l'intérieur (1bis) de la chambre (1) de combustion en faisant un angle (α) non nul par rapport à la paroi interne (1'), le générateur de tourbillons créant des tourbillons longitudinaux selon un axe (BB) parallèle à l'axe longitudinal de la chambre (1) de combustion.

4. Système de propulsion selon l'une des revendications précédentes, dans lequel le générateur de tourbillon est fait d'une pièce avec la partie interne de la paroi du corps de chambre de combustion.

5. Système de propulsion selon l'une des revendications précédentes, dans lequel le générateur (10) de tourbillons est une pièce de forme triangulaire, rectangulaire, prisme.

6. Système de propulsion selon l'une des revendications précédentes, dans lequel les générateurs de tourbillons sont disposés en rangée le long de la paroi interne.

7. Système de propulsion selon la revendication précédente, dans lequel les rangées sont décalées les unes par rapport aux autres.

8. Système de propulsion selon l'une des revendications 6 à 7, dans lequel sur une même rangée deux générateurs de tourbillons disposés côte à côte sont parallèles entre eux.

9. Système de propulsion selon l'une des revendications précédentes, dans lequel le fluide caloporteur est constitué par un combustible ou un comburant.

10. Système de propulsion selon l'une quelconque des revendications précédentes, dans lequel la chambre de combustion présente une paroi lisse.

11. Système de propulsion selon l'une quelconque des revendications précédentes, dans lequel la chambre de combustion présente, orthogonalement à l'axe longitudinal (AA), une section circulaire ou ovale.

12. Système de propulsion selon l'une quelconque des revendications précédentes, dans lequel la chambre de combustion présente, orthogonalement à l'axe longitudinal (AA), une section définissant le contour d'un ensemble convexe.

## Patentansprüche

1. Antriebssystem einer Rakete, Folgendes umfassend
eine Verbrennungskammer (1), in der eine Verbrennung realisiert wird, und die durch einen Kragen (2) mit einem auseinanderlaufenden Teil (4) verbunden ist, und in der heiße Gasflüsse (GC) entlang einer Längsachse (AA) der Verbrennungskammer (1) strömen, wobei die Verbrennungskammer (1) eine Innenwand (1') und eine Außenwand (1") umfasst, die einen Hohlraum (5) definieren, in dessen Inneren ein Wärmeträgerfluid strömt, um die Verbrennungskammer (1) zu kühlen;
eine Vielzahl von Strömungswirbelgeneratoren (10), die an der Innenwand (1') im Inneren (1bis) des Verbrennungskammerkörpers (1) gelegen sind, und konfiguriert sind, damit die heißen Gasflüsse in Wirbelform über die Längsachse (AA) entlang der Innenwand strömen, um die Wärmeübertragungen zwischen den Flüssen von heißem Gas und der Innenwand der Verbrennungskammer (1) zu erhöhen.

2. Antriebssystem nach Anspruch 1, das weiter Rippen (20) umfasst, die stromaufwärts der Wirbelgeneratoren gelegen sind, wobei die Wirbelgeneratoren konfiguriert sind, um Flüsse von heißem Gas mit unterschiedlichen Temperaturen zu mischen, die am Ausgang der Rippen und der Zwischenräume zwischen den Rippen erhalten werden.

3. Antriebssystem nach Anspruch 1, wobei der Wirbelgenerator ein aus der Innenwand (1') hervorstehendes Teil ist, und ins Innere (1bis) der Verbrennungskammer (1) gerichtet ist, und einen Winkel (*α*) ungleich null in Bezug auf die Innenwand (1') bildet, wobei der Wirbelgenerator Längswirbel über eine Achse (BB), parallel zur Längsachse der Verbrennungskammer (1) kreiert.

4. Antriebssystem nach einem der vorstehenden Ansprüche, wobei der Wirbelgenerator aus einem Stück mit dem inneren Teil der Wand des Verbrennungskammerkörpers gefertigt ist.

5. Antriebssystem nach einem der vorstehenden Ansprüche, wobei der Wirbelgenerator (10) ein Stück in dreieckiger, rechteckiger, prismatischer Form ist.

6. Antriebssystem nach einem der vorstehenden Ansprüche, wobei die Wirbelgeneratoren in Reihe entlang der Innenwand angeordnet sind.

7. Antriebssystem nach dem vorstehenden Anspruch, wobei die Reihen zueinander versetzt sind.

8. Antriebssystem nach einem der Ansprüche 6 bis 7, wobei in einer selben Reihe zwei Seite an Seite angeordnete Wirbelgeneratoren parallel zueinander sind.

9. Antriebssystem nach einem der vorstehenden Ansprüche, wobei das Wärmeträgerfluid durch einen Brennstoff oder einen Sauerstoffträger gebildet wird.

10. Antriebssystem nach einem der vorstehenden Ansprüche, wobei die Verbrennungskammer eine glatte Wand aufweist.

11. Antriebssystem nach einem der vorstehenden Ansprüche, wobei die Verbrennungskammer orthogonal zur Längsachse (AA) einen kreisförmigen oder ovalen Querschnitt aufweist.

12. Antriebssystem nach einem der vorstehenden Ansprüche, wobei die Verbrennungskammer orthogonal zur Längsachse (AA) einen Querschnitt aufweist, der die Kontur einer konvexen Einheit definiert.

## Claims

1. A rocket propulsion system comprising
a combustion chamber (1) in which combustion is carried out and which is connected by a neck (2) to a divergent portion (4), and in which hot gas streams (GC) flow according to a longitudinal axis (AA) of the combustion chamber (1), the combustion chamber (1) comprising an inner wall (1') and an outer wall (1") defining a cavity (5) inside which flows a heat-transfer fluid for cooling the combustion chamber (1);
a plurality of flow vortex generators (10) located on the inner wall (1') inside (1bis) of the combustion chamber body (1) and configured so that the hot gas streams flow in a swirling manner according to the longitudinal axis (AA) along the inner wall in order to increase the heat transfers between the hot gas streams and the inner wall of the combustion chamber (1).

2. The propulsion system according to claim 1, further comprising fins (20) located upstream of the vortex generators, the vortex generators being configured to mix hot gas streams at different temperatures obtained at the outlet of the fins and the inter-fins interstices.

3. The propulsion system according to claim 1, wherein the vortex generator is a part projecting from the inner wall (1') and directed towards the inside (1bis) of the combustion chamber (1) at a non-zero angle (α) with respect to the inner wall (1'), the vortex generator creating longitudinal vortices according to an axis (BB) parallel to the longitudinal axis of the combustion chamber (1).

4. The propulsion system according to any of the preceding claims, wherein the vortex generator is made in one piece with the inner portion of the wall of the combustion chamber body.

5. The propulsion system according to any of the preceding claims, wherein the vortex generator (10) is a triangular, rectangular, prism-shaped part.

6. The propulsion system according to any of the preceding claims, wherein the vortex generators are disposed in a row along the inner wall.

7. The propulsion system according to the preceding claim, wherein the rows are offset from one other.

8. The propulsion system according to any of claims 6 to 7, wherein two vortex generators disposed side by side, on a same row, are parallel to one another.

9. The propulsion system according to any of the preceding claims, wherein the heat-transfer fluid consists of a fuel or an oxidizer.

10. The propulsion system according to any one of the preceding claims, wherein the combustion chamber has a smooth wall.

11. The propulsion system according to any one of the preceding claims, wherein the combustion chamber has, orthogonally to the longitudinal axis (AA), a circular or oval section.

12. The propulsion system according to any one of the preceding claims, wherein the combustion chamber has, orthogonally to the longitudinal axis (AA), a section defining the contour of a convex assembly.
